# EUROPÄISCHE PATENTSCHRIFT

(11) **EP 3 094 524 B1**
(45) Veröffentlichungstag und Bekanntmachung des Hinweises auf die Patenterteilung: **05.05.2021**
(21) Anmeldenummer: 15702162.7
(22) Anmeldetag: 19.01.2015
(51) Int. Cl.: B60R 13/08, B32B 5/26, B32B 15/14, B32B 27/12

(54) **WÄRMESCHUTZPRODUKT**
HEAT PROTECTION PRODUCT
PRODUIT DE PROTECTION THERMIQUE

(30) Priorität: 17.01.2014 EP 14151575
(43) Veröffentlichungstag der Anmeldung: 23.11.2016
(73) Patentinhaber: Zipper-Technik GmbH, 63263 Neu-Isenburg (DE)
(72) Erfinder: REUSSWIG, Frank, 63579 Freigericht (DE); KIRSCHNING, Manfred, 63579 Freigericht (DE); PLUMMER, Sean, Gilbert, Arizona 85233 (US)
(74) Vertreter: dompatent von Kreisler Selting Werner - Partnerschaft von Patent- und Rechtsanwälten mbB
(86) Internationale Anmeldenummer: PCT/EP2015/050880
(87) Internationale Veröffentlichungsnummer: WO 2015/107189

(56) Entgegenhaltungen:
- EP-A2- 2 185 265
- WO-A1-2012/119291
- CN-U- 201 800 291
- CN-U- 202 271 596
- DE-A1- 19 720 537
- US-A- 3 293 105
- US-A- 3 334 006
- US-A1- 2013 183 484

## Beschreibung

Die vorliegende Erfindung betrifft ein Wärmeschutzprodukt und ein Verfahren zu seiner Herstellung. Wärmeabschirmende oder wärmeschützende Produkte werden beispielsweise im Kraftfahrzeugbereich eingesetzt. Diese werden benutzt, um temperaturempfindliche Bauteile (beispielsweise Sensoren, Kabel, Schläuche, Stecker, Elektronik) vor der Abwärme anderer Bauteile (beispielsweise der Abgasanlage) zu schützen. DE 197 55 314 beschreibt beispielsweise ein solches Bauteil.

Die DE 10 2004 044 057 beschreibt eine Wärmeabschirmung in Form einer wärmebeständigen Folie oder eines wärmebeständigen Flächenelementes.

DE 197 20 537 A1 betrifft ein Element zur Verkleidung von Einbauteilen, bei dem eine Metallfolie zwischen einem textilen Gebilde und einem Textilfaservlies eingeschlossen ist.

EP 1 914 121 A2 betrifft ein Wärmeschutzmaterial, das aus einem textilen Träger besteht, der mit einem Bindemittel beschichtet und mit einem Metall durch Gasphasenabscheidung bedampft ist. Solche Materialien zeigen Stabilitäten bis hinauf zu 300°C für 1000 h. Allerdings ist die Wärmedämmungseigenschaft entsprechender Produkte begrenzt.

Die Anforderungen an entsprechende Wärmeschutzprodukte sind vielfältig.

Zum einen sollen die Produkte eine hohe Wärmedämmung aufweisen, d.h. die Temperaturdifferenz zwischen der der Wärmequelle zugewandten Seite und der abgewandten Seite sollte möglichst groß sein.

Entsprechende Wärmeschutzprodukte müssen auf der anderen Seite kompakt sein, denn in entsprechende Maschinen, beispielsweise Motoren, werden die Abstände zwischen den Bauteilen immer kleiner.

Entsprechende Wärmeschutzprodukte müssen darüber hinaus eine gute Verarbeitbarkeit zeigen.

Schließlich sind auch die Kosten entsprechender Produkte zu berücksichtigen. Aufgabe der vorliegenden Erfindung war es, weitere Wärmeschutzprodukte bereit zu stellen, die die genannten Anforderungen erfüllen und dabei zumindest teilwelse den Stand der Technik übertreffen können.

Gelöst wird die Aufgabe durch ein Wärmeschutzprodukt mit den Merkmalen der Ansprüche 1-11

Das erfindungsgemäße Wärmeschutzprodukt enthält somit zum einen eine Filzschicht, die Polysulfonamidfasern enthält. Polysulfonamidfasern sind beispielsweise in der EP 1 975 285 A2 beschrieben.

Erfindungsgemäß werden die Fasern zu einer Filzschicht verarbeltet. Fliz ist ein textiles Flächengebilde aus einem ungeordneten, nur schwer zu trennenden Fasergut. Zur Herstellung sind verschiedene Verfahren verfügbar. Bekannt sind insbesondere die Vernadelung zur Herstellung von Nadelfilzen oder die Verfestigung unter hohem Druck. Auch können Materialien zunächst gewebt werden und anschileBend durch Walken verfilzt werden.

Die Filzschicht enthält bevorzugt mindestens 20 Gew.-%, bevorzugt mindestens 50 Gew.-%, noch mehr bevorzugt mindestens 70 oder 80 Gew,-% Polysulfonamidfasern.

In einigen Ausführungsformen sind zusätzlich andere Fasern enthalten, insbesondere Fasern aus präoxidiertern Polyacrylnitril.

Es hat sich herausgestellt, dass die Dicke der Filzschicht bevorzugt im Bereich von 1 bis 10 mm liegen sollte.

Als Dichte der Filzschicht sind Dichten von 0,05 bis 0,25 g/cm³ bevorzugt.

Zusätzlich zu der Filzschicht weist das Wärmeschutzprodukt eine Textilschicht auf. Diese enthält anorganische Fasern. Bevorzugte anorganische Fasern sind insbesondere Glas, Carbon, Silikat, Keramik, Aluminiumsilikat, Basalt und Mischung hiervon.

Die Verwendung von Glasfasern ist besonders bevorzugt.

Neben den anorganischen Fasern können grundsätzlich geringe Mengen organischer Fasern enthalten sind. Bevorzugt liegt der Anteil an anorganischen Fasern bei mindestens 80 Gew.-%, bevorzugt mindestens 90 Gew.-% der Textilschicht.

Dabei kann die Textilschicht ein Gewebe, Gestricke, Gewirke, Gefüge oder Gelege sein.

Die Verbindung zwischen der Textilschicht und der Filzschicht kann beispielsweise durch Filzen, Nadeln, Wirken, Walken, Verkleben oder Kombinationen davon erfolgen. Das Verfilzen der beiden Schichten ist besonders bevorzugt.

Als Klebstoffe kommen insbesondere Silikon-, Polyurethan- oder Acrylklebstoffe in Frage.

In einigen Ausführungsformen kann sich zwischen der Textilschicht und der Filzschicht noch eine Schicht z.B. eine Folie oder eine Beschichtung auf der Textilschicht befinden. Diese kann dazu dienen, Konvektion durch das Textilgewebe und den Filz zu vermindern. Solche Folien bzw. Beschichtungen sind bevorzugt aus temperaturbeständigen Polymeren, insbesondere Silikonpolymeren.

Zusätzlich weist das Wärmeschutzprodukt zumindest auf der Seite der Textilschicht, die nicht in Kontakt mit der Filzschicht steht, eine Metallschicht auf.

Eine entsprechende Metallschicht ist somit eine Außenseite des Produktes und wird der Wärmequelle zugewandt.

In einer Ausführungsform ist die Metallschicht durch Gasphasenabscheidung aufgebracht; dabei kann sowohl eine physikalische Gasphasenabscheidung als auch eine chemische Gasphasenabscheidung zum Einsatz kommen.

Bevorzugt wird die Textilschicht vor dem Aufbringen mit einem Bindemittel beschichtet. Als Bindemittel eignen sich insbesondere EPDM, PFA, PMMA, POM, PEEK, PVA, Epoxidharzen, Hybridpolymeren, Siliciumverbindungen, insbesondere Polysiloxanen oder Mischungen hiervon.

Die aufgetragene Metallschicht kann dabei Stärken im Bereich von etwa 50 bis 1000 nm aufweisen. Grundsätzlich genügt es, wenn die Metallschicht auf einer Seite aufgebracht ist, sie kann aber auf der Textilschicht auch beidseitig aufgebracht werden.

Während es denkbar ist, dass zunächst die Filzschicht und die Textilschicht verbunden/verklebt werden und anschließend durch Gasphasenabscheidung die Metallschicht aufgebracht wird, wird es bevorzugt, dass zunächst die Textilschicht mit einer Metallschicht durch Gasphasenabscheidung versehen und sie dann mit der Filzschicht verbunden/verklebt wird.

Insbesondere in dieser Ausführungsform ist es hilfreich, zwischen der Textilschicht und der Filzschicht als weitere Schicht eine Polymerfolie bzw. Polymerbeschichtung, insbesondere aus Silikonpolymeren vorzusehen, die zur Hemmung der Konvektionen dient.

In einer anderen Ausführungsform wird die Metallschicht nicht durch Gasphasenabscheidung abgeschieden, sondern als Metallfolie mit der Textilschicht verbunden. Hierbei eignen sind insbesondere Metallfolien mit einer Stärke zwischen 5 und 100 µm. Bevorzugt wird die Metallfolie geklebt, beispielsweise mit einem Silikon-, einem Polyurethan- oder einem Acrylklebstoff.

Obwohl es auch in diesem Fall möglich ist, zunächst die Metallschicht auf die Textilschicht zu montieren und sie dann mit der Filzschicht zu verbinden, wird bevorzugt, dass zunächst Filzschicht und Textilschicht verbunden werden, bevor die Metalischicht aufgebracht wird. Als Metall wird insbesondere Aluminium eingesetzt. Es können aber grundsätzlich auch Chrom, Titan, Kupfer, Silber, Gold, Silicium oder Kombinationen hiervon eingesetzt werden.

Das erfindungsgemäße Wärmeschutzprodukt kann zusätzlich Verschlusskomponenten aufweisen, mit denen die Wärmeschutzprodukte in eine geeignete Form gebracht werden können. Geeignete Komponenten sind beispielsweise Klettverschlüsse und Druckknöpfe. Zur Befestigung an den Einsatzstellen können weiterhin beispielsweise Bänder, Binder oder Schnüre vorhanden sein. Es kann auch eine zusätzliche Kleberausrüstung vorhanden sein.

In einer weiteren Ausführungsform können z.B. auch Nähte, Druckknöpfe, Haken und/oder Ösen vorhanden sein, mit denen Teilbereiche des Wärmeschutzproduktes zusammengehalten werden.

Gegenstand der Erfindung Ist auch ein Verfahren zur Herstellung des Wärmeschutzproduktes gemäß den Ansprüchen 1 bis 11 umfassend die Schritte:
(i)
   - Verbinden einer Filzschicht mit einer Textilschicht und
   - Montieren einer Metallschicht an einer Textilschicht oder
(ii)
   - Montieren einer Metalischicht an einer Textilschicht
   - Verbinden mit einer Filzschicht.

Dabei kann das Montieren auch eine Gasphasenabscheidung bedeuten.

Entsprechende Wärmeschutzprodukte eignen sich insbesondere zum Schutz von hitzeempfindlichen Bauteilen, im Kraftfahrzeugbau, oder zur Isolierung von Abgas-Anlagen, -Leitungen oder -Bauteilen.

Unerwarteterweise können Filze, die Polysulfonamidfasern enthalten Temperaturen standhalten, die für organische Materialien nicht erwartet wurden. So übersteht der erfindungsgemäße Aufbau eine Erhitzung für 1000 h auf 300°C.

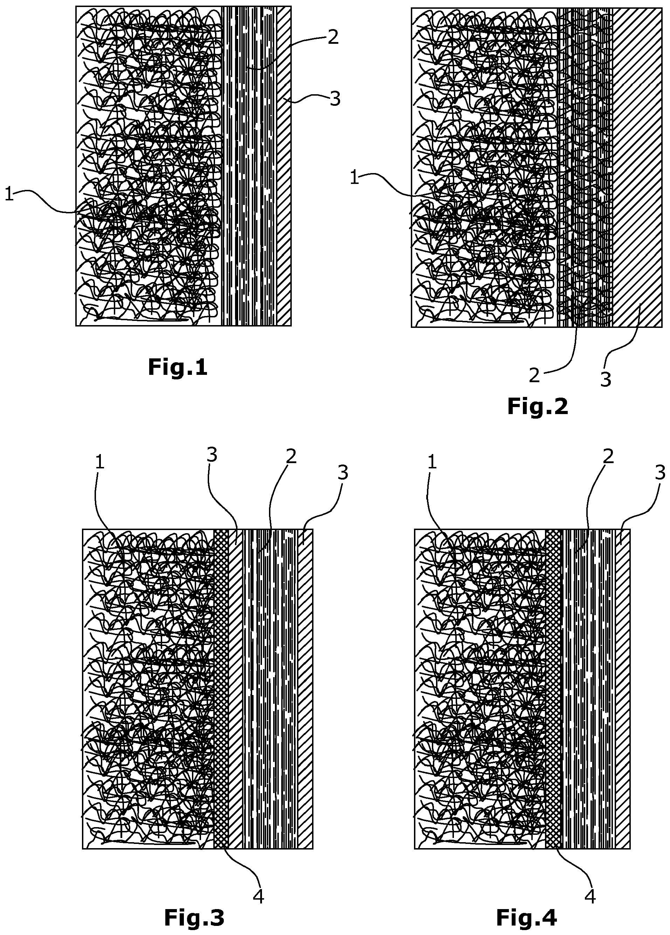

Figur 1 zeigt eine Ausführungsform der Erfindung, bei der eine Textilschicht 2 auf einer Seite mit einer Filzschicht 1 verbunden ist und sich auf der anderen Seite eine durch Gasphasenabscheidung erhältliche Metallschicht 3 befindet.
Figur 2 zeigt eine Ausführungsform, bei der eine Filzschicht 1 und eine Textilschicht 2 durch Verfilzen verbunden sind, diese aber mit einer Metallfolie 3 verbunden ist.
Figur 3 zeigt eine Filzschicht 1, die mit einer Textilschicht 2 verbunden ist, die beidseitig mit durch Gasphasenabscheidung erhältlichen Metallschicht 3 versehen ist. Zwischen der Filzschicht und der Metallschicht 3 befindet sich eine Polymerschicht 4.
Figur 4 zeigt eine Filzschicht 1, die mit einer Textilschicht 2 verbunden ist, die einseitig mit einer durch Gasphasenabscheidung erhältlichen Metallschicht 3 versehen ist. Zwischen der Filzschicht 1 und der Textilschicht 2 befindet sich eine Polymerschicht 4.

Die Erfindung wird durch die nachfolgenden, nichtlimitierenden Beispiele näher erläutert.

### Untersuchungsverfahren

### Dickenschwund

Die Materialien wurden für definierte Zeiträume Temperaturen von 300°C ausgesetzt und die Dicke des Materials gemäß DIN EN ISO 5084 gemessen.

### Isolationseigenschaften

Die Metallseite des Produktes wurde auf eine definierte Temperatur erwärmt und die Temperaturdifferenz auf der Filzseite gemessen. Diese Messungen wurden wiederholt, nachdem das Produkt für 120 h auf der eingestellten Temperatur gelagert wurde.

### Vergleichsbeispiel 1

Es wurde ein Wärmeschutzprodukt hergestellt, in dem eine 2,0 mm dicke Filzschicht bestehend aus präoxidierten Polyacrylnitrilfasern mit einer 0,3 mm starken Glasgewebeschicht verklebt wurde, auf das eine 10 µm dicke Aluminiumfolie geklebt wurde.

### Beispiel 2

Eine 2,0 mm starke Filzschicht enthaltend 90 Gew.-% Polysulfonamidfasern und 10 Gew.-% präoxidierte Polyacrylnitrilfasern wurde mit einer 0,3 mm starken Glasgewebeschicht verklebt, auf das eine 10 µm dicke Aluminiumfolie geklebt wurde.

### Beispiel 3

Eine 1,6 mm dicke Filzschicht enthaltend 90 Gew.-% Polysulfonamid und 10 Gew.-% präoxidiertes Polyacrylnitril wurde mit einer 0,8 mm starken Glasgewebeschicht verfilzt und anschließend mit einer 25 µm dicken Aluminiumfolie verklebt.

### Vergleichsbeispiel 4

Auf ein ca. 0,3 mm starkes Glasgewebe, das einseitig mit einer ca. 100 nm dicken Metallschicht aus einer Gasphasenabscheidung versehen war, wurde eine ca. 0,1 mm starke Silikonbeschichtung aufgetragen, auf die dann eine ca. 2,1 mm dicke Filzschicht bestehend aus präoxidierten Polyacrylnitrilfasern aufgeklebt wurde.

### Beispiel 5

Auf ein ca. 0,3 mm starkes Glasgewebe, das einseitig mit einer ca. 100 nm dicken Metallschicht aus einer Gasphasenabscheidung versehen war, wurde eine ca. 0,1 mm starke Silikonbeschichtung aufgetragen, auf die dann eine ca. 1,8 mm dicke Filzschicht bestehend aus 90% Polysulfonamidfasern und 10% präoxidierten Polyacrylnitrilfasern aufgeklebt wurde.

### Ergebnisse

Tabellen 1 und 2 zeigen Messwerte der Beispiele.

Es zeigt sich, dass - wie zu erwarten - die Isolationseigenschaften mit einer dickeren Aluminium- oder dickeren Filzschicht in Abhängigkeit vom Materialaufbau zunehmen. Es zeigt sich aber auch, dass Filze, die keine Polysulfonamidfasern aufweisen, den Temperaturbelastungen nicht über längere Zeit gewachsen sind, sondern sowohl an der Dicke verlieren als auch in den Isolationseigenschaften signifikant nachlassen.

**Tabelle 1**

| | | **Vergleichsbeispiel 1** | | **Beis piel 2** | | **Beispiel 3** | |
|---|---|---|---|---|---|---|---|
| 300°C | Materialdicke | | Dickenschwund (total) | | Dickenschwund (total) | | Dickenschwund (total) |
| | nach 0h | 2,35 | | 2,36 | | 2,40 | |
| | nach 45h | 2,18 | 7% | 2,36 | 0% | 2,40 | 0% |
| | nach 120h | 2,09 | 11% | 2,29 | 3% | 2,33 | 3% |
| 200°C | Isolationseigenschaften | To-Tu (in Kelvin) | Isolationsreduktion | To-Tu (in Kelvin) | Isolationsreduktion | To-Tu (in Kelvin) | Isolationsreduktion |
| | nach 0h | 75 | | 75 | 0% | 87 | |
| | nach 120h | 55 | 27% | 73 | 3% | 86 | 1% |
| 250°C | Isolationseigenschaften | To-Tu (in Kelvin) | Isolationsreduktion | To-Tu (in Kelvin) | Isolationsreduktion | To-Tu (in Kelvin) | Isolationsreduktion |
| | nach 0h | 86 | | 87 | | 108 | |
| | nach 120h | 69 | 20% | 87 | 0% | 107 | 1% |
| 300°C | Isolationseigenschaften | To-Tu (in Kelvin) | Isolationsreduktion | To-Tu (in Kelvin) | Isolationsreduktion | To-Tu (in Kelvin) | Isolationsreduktion |
| | nach 0h | 100 | | 100 | | 127 | |
| | nach 120h | 83 | 17% | 100 | 0% | 127 | 0% |

**Tabelle 2**

| | | **Vergleichsbeispiel 4** | | **Beispiel 5** | |
|---|---|---|---|---|---|
| 300°C | Materialdicke | | Dickenschwund (total) | | Dickenschwund (total) |
| | nach 0h | 2,57 | | 2,16 | |
| | nach 45h | 2,43 | 6% | 2,14 | 1% |
| | nach 120h | 2,24 | 13% | 2,17 | 0% |
| 200°C | Isolationseigenschaften | To-Tu (in Kelvin) | Isolationsreduktion | To-Tu (in Kelvin) | Isolationsreduktion |
| | nach 0h | 76 | | 76 | |
| | nach 120h | 73 | 4% | 75 | 1% |
| 250°C | Isolationseigenschaften | To-Tu (in Kelvin) | Isolationsreduktion | To-Tu (in Kelvin) | Isolationsreduktion |
| | nach 0h | 95 | | 93 | |
| | nach 120h | 81 | 15% | 92 | 1% |
| 300°C | Isolationseigenschaften | To-Tu (in Kelvin) | Isolationsreduktion | To-Tu (in Kelvin) | Isolationsreduktion |
| | nach 0h | 111 | | 112 | |
| | nach 120h | 97 | 13% | 109 | 3% |

| | | | | | |
|---|---|---|---|---|---|
| To = Oberflächentemperatur auf der Metallseite (heiße Seite) Tu = Oberflächentemperatur auf der Filzseite (kalte Seite) To-Tu = Differenz der Oberflächentemperatur | | | | | |

## Patentansprüche

1. Wärmeschutzprodukt mit
- einer Filzschicht (1) enthaltend Polysulfonamidfasern
- einer Textilschicht (2) enthaltend anorganische Fasern wobei die Textilschicht (2) eine Metallschicht (3) aufweist,
wobei die Metallschicht (3) auf die Textilschicht (2) durch GasphasenabScheidung aufgebracht ist oder die Metallschicht (3) auf die Textilschicht (2) geklebt wird
und wobei die Metallschicht (3) eine Außenseite ist.

2. Wärmeschutzprodukt nach Anspruch 1, wobei die Filzschicht (1) mindestens 50 Gew.-% Polysulfonamidfasern enthält.

3. Wärmeschutzprodukt nach Anspruch 1 oder 2, wobei die Filzschicht (1) zusätzlich präoxidierte Polyacrylnitrilfasern enthält.

4. Wärmeschutzprodukt nach einem der Ansprüche 1 bis 3, wobei die Filzschicht (1) eine Dicke von 1 bis 10 mm aufweist, und/oder die Filzschicht (1) eine Dichte von 0,05 bis 0,25 g/cm³ aufweist.

5. Wärmeschutzprodukt nach einem der Ansprüche 1 bis 4, **dadurch gekennzeichnet, dass** sich zwischen der Filzschicht (1) und der Textilschicht (2) eine Polymerschicht (4), insbesondere eine Polymerfolie oder eine Polymerbeschichtung befindet.

6. Wärmeschutzprodukt nach einem der Ansprüche 1 bis 5, wobei die anorganischen Fasern der Textilschicht (2) aus der Gruppe bestehend aus Glas, Carbon, Silikat, Keramik, Aluminiumsilikat, Basalt und Mischung ausgewählt werden.

7. Wärmeschutzprodukt nach einem der Ansprüche 1 bis 6, **dadurch gekennzeichnet, dass** die Textilschicht (2) ein Gewebe, Gestricke, Gewirke, Gefüge oder Gelege ist.

8. Wärmeschutzprodukt nach einem der Ansprüche 1 bis 7, **dadurch gekennzeichnet, dass** die Filzschicht (1) und die Textilschicht (2) durch Filzen, Nadeln, Wirken, Walken, Verkleben oder Kombinationen davon verbunden sind.

9. Wärmeschutzprodukt nach Anspruch 1, wobei die Textilschicht (2) vor dem Aufbringen der Metallschicht (3) mit einem Bindemittel beschichtet wird.

10. Wärmeschutzprodukt nach Anspruch 9, wobei das Bindemittel ausgewählt wird aus EPDM, PFA, PMMA, POM, PEEK, PVA, Epoxidharzen, Hybridpolymeren, Siliciumverbindungen, insbesondere Polysiloxanen,

11. Wärmeschutzprodukt nach Anspruch 1, **dadurch gekennzeichnet, dass** die Metallschicht (3) ausgewählt wird aus Aluminium, Chrom, Titan, Kupfer, Silber, Gold, Silicium oder Kombinationen hiervon, bevorzugt in einer Schichtdicke von 5 bis 100 µm.

12. Verfahren zur Herstellung eines Wärmeschutzproduktes nach einem der Ansprüche 1 bis 11 umfassend die Schritte:
(i)
- Verbinden einer Filzschicht (1) mit einer Textilschicht (2) und
- Montieren einer Metalischicht (3) an einer Textilschicht (2)
oder
(ii)
- Montieren einer Metallschicht (3) an einer Textilschicht (2) und
- Verbinden mit einer Filzschicht (1).

## Claims

1. A heat protection product comprising
- a felt layer (1) comprising polysulfonamide fibers
- a textile layer (2) comprising inorganic fibers
wherein said textile layer (2) comprises a metal layer (3), wherein said metal layer (3) is applied to said textile layer (2) by vapor deposition, or said metal layer (3) is adhesively bonded to said textile layer (2), and
wherein said metal layer (3) is an exterior layer.

2. The heat protection product according to claim 1, wherein said felt layer (1) comprises at least 50% by weight of polysulfonamide fibers.

3. The heat protection product according to claim 1 or 2, wherein said felt layer (1) additionally comprises preoxidized polyacrylonitrile fibers.

4. The heat protection product according to any of claims 1 to 3, wherein said felt layer (1) has a thickness of from 1 to 10 mm, and/or said felt layer (1) has a density of from 0.05 to 0.25 g/cm³.

5. The heat protection product according to any of claims 1 to 4, **characterized in that** a polymer layer (4), especially a polymer sheet or polymer coating, is provided between the felt layer (1) and the textile layer (2).

6. The heat protection product according to any of claims 1 to 5, wherein said inorganic fibers of the textile layer (2) are selected from the group consisting of glass, carbon, silicate, ceramics, aluminum silicate, basalt, and mixtures thereof.

7. The heat protection product according to any of claims 1 to 6, **characterized in that** said textile layer (2) is a woven fabric, knitting, knitted fabric, structure or non-crimp fabric.

8. The heat protection product according to any of claims 1 to 7, **characterized in that** said felt layer (1) and said textile layer (2) are bonded together by felting, needling, knitting, fulling, adhesive bonding, or combinations thereof.

9. The heat protection product according to claim 1, wherein said textile layer (2) is coated with a binder before the metal layer (3) is applied.

10. The heat protection product according to claim 9, wherein said binder is selected from EPDM, PFA, PMMA, POM, PEEK, PVA, epoxy resins, hybrid polymers, silicon compounds, especially polysiloxanes.

11. The heat protection product according to claim 1, **characterized in that** said metal layer (3) is selected from aluminum, chromium, titanium, copper, silver, gold, silicon or combinations thereof, preferably in a layer thickness of from 5 to 100 µm.

12. A process for preparing a heat protection product according to any of claims 1 to 11, comprising the steps:
(i)
- bonding a felt layer (1) to a textile layer (2), and
- mounting a metal layer (3) to a textile layer (2),
or
(ii)
- mounting a metal layer (3) to a textile layer (2), and
- bonding it to a felt layer (1).

## Revendications

1. Produit calorifuge doté
- d'une couche de feutre (1) contenant des fibres de polysulfonamide
- d'une couche textile (2) contenant des fibres inorganiques
dans lequel la couche textile (2) comporte une couche métallique (3),
dans lequel la couche métallique (3) est appliquée sur la couche textile (2) par dépôt en phase vapeur ou la couche métallique (3) est collée sur la couche textile (2)
et dans lequel la couche métallique (3) est une face externe.

2. Produit calorifuge selon la revendication 1, dans lequel la couche de feutre (1) contient au moins 50 % (m/m) de fibres de polysulfonamide.

3. Produit calorifuge selon la revendication 1 ou 2, dans lequel la couche de feutre (1) contient en outre des fibres de polyacrylonitrile préoxydé.

4. Produit calorifuge selon l'une des revendications 1 à 3, dans lequel la couche de feutre (1) présente une épaisseur de 1 à 10 mm, et/ou dans lequel la couche de feutre (1) présente une densité de 0,05 à 0,25 g/cm³.

5. Produit calorifuge selon l'une des revendications 1 à 4, dans lequel entre la couche de feutre (1) et la couche textile (2) se trouve une couche polymère (4), en particulier un film polymère ou un revêtement polymère.

6. Produit calorifuge selon l'une des revendications 1 à 5, dans lequel les fibres inorganiques de la couche textile (2) sont sélectionnées parmi le groupe constitué par le verre, le carbone, les silicates, les céramiques, les aluminosilicates, le basalte et les mélanges.

7. Produit calorifuge selon l'une des revendications 1 à 6, **caractérisé en ce que** la couche textile (2) est un tissu, un tricot, un tulle, une texture ou une natte.

8. Produit calorifuge selon l'une des revendications 1 à 7, **caractérisé en ce que** la couche de feutre (1) et la couche textile (2) sont reliées l'une à l'autre par feutrage, piquage, tricotage, foulage, collage ou des combinaisons de ceux-ci.

9. Produit calorifuge selon la revendication 1, dans lequel la couche textile (2) est enduite d'un liant avant application de la couche métallique (3).

10. Produit calorifuge selon la revendication 9, dans lequel le liant est sélectionné parmi l'EPDM, le PFA, le PMMA, le POM, le PEEK, le PVA, les résines époxy, les polymères hybrides, les composés du silicium, en particulier les polysiloxanes.

11. Produit calorifuge selon la revendication 1, **caractérisé en ce que** la couche métallique (3) est sélectionnée parmi l'aluminium, le chrome, le titane, le cuivre, l'argent, l'or, le silicium ou des combinaisons de ceux-ci, en particulier dans une épaisseur de couche de 5 à 100 µm.

12. Procédé de fabrication d'un produit calorifuge selon l'une des revendications 1 à 11, comprenant les étapes :
(i)
- liaison d'une couche de feutre (1) avec une couche textile (2) et
- montage d'une couche métallique (3) sur une couche textile (2) ou
(ii)
- montage d'une couche métallique (3) sur une couche textile (2) et
- liaison avec une couche de feutre (1).
